# EUROPÄISCHE PATENTSCHRIFT

(11) **EP 1 158 460 B1**
(45) Veröffentlichungstag und Bekanntmachung des Hinweises auf die Patenterteilung: **06.10.2004**
(21) Anmeldenummer: 01107954.8
(22) Anmeldetag: 28.03.2001
(51) Int. Cl.: G06T 1/00

(54) **Verfahren und Vorrichtung zur Bildverarbeitung**
Image processing system and method
Système et procédé de traitement d'images

(30) Priorität: 26.05.2000 DE 10026301
(43) Veröffentlichungstag der Anmeldung: 28.11.2001
(73) Patentinhaber: Sick AG, 79183 Waldkirch, Breisgau (DE)
(72) Erfinder: Alt, Gerhard, 79350 Sexau (DE); Nübling, Ralf Ulrich, 79211 Denzlingen (DE)
(74) Vertreter: Manitz, Finsterwald & Partner

(56) Entgegenhaltungen:
- US-A- 4 969 037
- MURASE, HIROSHI UND NAYAR, SHREE K.: "Illumination Planning for Object Recognition Using Parametric Eigenspaces" IEEE TRANSACTIONS ON PATTERN ANALYSIS AND MACHINE INTELLIGENCE, Bd. 16, Nr. 12, 1994, Seiten 1219-1227, XP002222165

## Beschreibung

Die vorliegende Erfindung betrifft ein Verfahren zur Beleuchtungsplanung für die Objekterkennung nach dem Oberbegriff des Anspruchs 1 wie beispielsweise bekannt aus H. Murase und K. Nayar: "Illumination Planning for Object Recognition Using Parametric Eigenspaces", IEEE Transactions on Pattern Analysis and Machine Intelligence, Vol. 16, No. 12, Dezember 1994, Seiten 1219 - 1227.

Dieser Artikel beschreibt ein Verfahren zur Bestimmung der für die Objekterkennung optimalen Beleuchungsrichtung über alle Posen des besagten Objekts unter Verwendung von Eigenräumen, in denen der minimale Abstand in der Pose parametrisierter Darstellungen verschiedener Objekte über alle Beleuchtungen maximiert wird.

Verfahren der eingangs genannten Art können für unterschiedliche Aufgabenstellungen verwendet werden. Übliche Aufgaben sind die Mustererkennung, Bildverbesserung, Segmentierung, Klassifizierung, Aufgaben zur Bestimmung von Maßen in einer Objektszene (Qualitätsprüfung), Lageprüfung oder Erkennung von Bearbeitungsfehlern, z.B. von Oberflächenfehlern. Zur Bilderfassung werden üblicherweise Kamerasysteme eingesetzt, so daß die Objekt- bzw. Musterbeleuchtung eine wesentliche Rolle spielt. Klassische Bildverarbeitungssysteme umfassen beispielsweise eine CCD-Kamera, wobei die Beleuchtung des Objekts entweder mit Umgebungslicht oder, zur Signalverstärkung, mit externen Lichtquellen beleuchtet wird. Neuere Systeme sind beispielsweise als CMOS-basierende Kamerasysteme ausgebildet, die sehr kompakt ausgebildet sind und über eine integrierte aktive Beleuchtung verfügen können. Die Beleuchtung des Objekts erfolgt dabei über diese integrierte Beleuchtung in der Regel aus relativ kurzem Abstand.

Die Beleuchtung kann dabei beispielsweise als Ringbeleuchtung um ein üblicherweise verwendetes Objektiv ausgebildet sein und beispielsweise mit Halbleiterstrahlungsquellen realisiert werden. Diese können das Objekt direkt oder mit vorgeschalteter Optik beleuchten. Durch die ringförmige Beleuchtung wird das Objekt aus vielen Richtungen gleichzeitig beleuchtet, was sich je nach Aufgabenstellung zur Objekterkennung, beispielsweise bei glänzenden Objekten, insbesondere bei einer Anwesenheitsprüfung als nachteilig erweisen kann.

Aus der US 4969037 ist eine Beleuchtungseinrichtung mit Dioden für ein Bildverarbeitungssystem bekannt, bei dem die Lichtintensität der Dioden geregelt wird, um Störungen bei der optimalen Beleuchtungseinstellung auszugleichen.

Dabei sind die Leuchtdioden konzentrisch um das Kameraobjektiv angeordnet und in Gruppen austeuerbar.

Es ist eine Aufgabe der vorliegenden Erfindung, ein Verfahren der eingangs genannten Art so auszubilden, daß unabhängig von der Art des erfaßten Objekts und von der gestellten Aufgabe eine möglichst gute Erfassung eines vorgegeben Objekts erreicht wird.

Die Lösung der Aufgabe erfolgt durch die Merkmale des Anspruchs 1.

Die das Verfahren betreffende Aufgabe wird erfindungsgemäß ausgehend von einem Verfahren der eingangs genannten Art dadurch gelöst, daß in einem Einlernvorgang nacheinander jeweils unterschiedliche Gruppen der Sendeelemente zum Aussenden von Licht angesteuert werden, daß anhand von vorgegebenen Auswahlkriterien die Gruppe der Sendeelemente als Referenzgruppe bestimmt wird, bei deren Ansteuerung während des Einlernvorgangs das für die Erkennung des Objekts am besten geeignete Abbild erfaßt wird, und daß nach Beenden des Einlernvorgangs zum Erfassen des eingelernten Objekts die Sendeelemente der Referenzgruppe angesteuert werden.

Bei einer Vorrichtung zur Durchführung des erfindungsgemäßen Verfahrens werden die Sendeelemente in unterschiedlichen Gruppen zusammengefaßt, wobei die Sendeelemente einer Gruppe jeweils gemeinsam, jedoch getrennt von den Sendeelementen der anderen Gruppen zum Aussenden von Licht ansteuerbar sind.

Erfindungsgemäß erfolgt somit vor der eigentlichen Objekterfassung bzw. - erkennung im sogenannten Objekterfassungsbetrieb ein intelligenter Einlernvorgang. Während des Einlernvorgangs werden gezielt nicht alle Sendeelemente gleichzeitig angesteuert, sondern es werden gleichzeitig jeweils nur die Sendeelemente einer Gruppe von Sendeelementen angesteuert, wobei jede Gruppe nur eine Teilmenge der gesamten Anzahl der Sendeelemente umfaßt. Die Ansteuerung der unterschiedlichen Gruppen erfolgt wiederum nacheinander. Dadurch wird erreicht, daß sich je nach Geometrie oder Oberflächeneigenschaft, beispielsweise Remissionsverhalten, des beleuchteten Objekts unterschiedliche Abbilder ergeben, die je nach gewählter Gruppe von Sendeelementen unterschiedliche, das Objekt charakterisierende Merkmale besitzen.

Nachdem nacheinander alle Gruppen angesteuert wurden, wird diejenige Gruppe der Sendeelemente als Referenzgruppe bestimmt, bei deren Ansteuerung das für die Erkennung des Objekts am besten geeignete Abbild erfaßt wird. Im normalen Objekterfassungsbetrieb werden dann zum Erfassen des Objekts gerade die Sendeelemente der Referenzgruppe angesteuert, da mit diesen die Erkennungswahrscheinlichkeit des Objekts optimal ist bzw. die charakteristischen Merkmale des Objekts am besten erfaßt werden können.

Werden beispielsweise wie beim Stand der Technik immer alle ringförmig angeordneten Sendeelemente angesteuert, so kann das dazu führen, daß für das Objekt charakteristische Schatten durch die symmetrische, ringförmige Beleuchtung nahezu ausgelöscht werden und damit z.B. die Erkennungswahrscheinlichkeit für das Objekt verringert wird. Bei dem erfindungsgemäßen Verfahren kann durch geeignete Gruppierung der Sendeelemente der Schattenwurf hingegen maximiert werden, so daß auch die Erkennungswahrscheinlichkeit für das Objekt bzw. für die charakteristischen Merkmale des Objekts maximiert wird.

Jede Gruppe kann genau ein Sendeelement umfassen. Die Sendeelemente können dabei beispielsweise entsprechend ihrer Anordnung sequentiell nacheinander einzeln angesteuert werden, so daß bei einer ringförmigen Anordnung der Sendeelemente nach Beenden des Einlernvorgangs eine Beleuchtung des Objekts aus allen möglichen unterschiedlichen Winkeln erfolgt. Anhand der vorgegebenen Auswahlkriterien wird anschließend das Sendeelement ausgewählt und gespeichert, für das die Erfolgswahrscheinlichkeit für die Erkennung des Objekts bzw. dessen charakteristischer Merkmale am höchsten ist. Grundsätzlich können die Sendeelemente auch in beliebiger Reihenfolge angesteuert werden, da alle jeweils während des Einlernvorgangs erfaßten Abbilder bzw. charakteristische Merkmale der Abbilder gespeichert und zur Auswahl der geeignetsten Gruppe bzw. in diesem Fall des geeignetsten Sendeelements nach Vollenden des Einlernvorgangs miteinander verglichen werden. Auf die Reihenfolge der Ansteuerung der einzelnen Gruppen kommt es daher während des Einlernvorgangs nicht an.

Es ist auch möglich, daß jede Gruppe mindestens ein Sendeelement, insbesondere mehrere Sendeelemente umfaßt. Die Gruppen können dabei überlappend oder überlappungsfrei gewählt werden, d.h. jeweils Sendeelemente enthalten, die entweder auch in anderen Gruppen enthalten sind oder ausschließlich Sendeelemente enthalten, die nicht in anderen Gruppen enthalten sind. Auch in diesem Fall ist die Reihenfolge der Ansteuerung der jeweiligen Gruppen während des Einlernvorgangs nicht relevant.

Nach einer weiteren vorteilhaften Ausführungsform der Erfindung wird die Gruppe der Sendeelemente als Referenzgruppe ausgewählt, bei deren Ansteuerung das erfaßte Abbild die für die das Objekt charakteristischsten Merkmale besitzt und/oder bei deren Ansteuerung ein charakteristisches Merkmal oder mehrere charakteristische Merkmale des erfaßten Objekts optimal sind, beispielsweise einen Extremwert annehmen. Als charakteristische Merkmale können beispielsweise Schattenwurf, Reflexionen und/oder Kontrastübergänge ausgewertet werden.

Damit ist es beispielsweise möglich, daß die Gruppe der Sendeelemente als Referenzgruppe ausgewählt wird, bei deren Ansteuerung das erfaßte Abbild die höchsten Kontrastübergänge besitzt. Welches Merkmal als vorgegebenes Auswahlkriterium für die Auswahl der Referenzgruppe verwendet wird, kann durch praktische Versuche ermittelt werden und hängt insbesondere von der Ausgestaltung des zu erfassenden Objekts ab.

Nach einer weiteren bevorzugten Ausführungsform der Erfindung werden zum Erfassen des eingelernten Objekts im Objekterfassungsbetrieb ausschließlich die Sendeelemente der Referenzgruppe angesteuert. Dadurch wird die für das Erfassen des eingelernten Objekts im Objekterfassungsbetrieb verwendete Zeit minimiert, wobei durch die Verwendung der Referenzgruppe die Erkennungswahrscheinlichkeit gleichzeitig - unter Berücksichtigung der minimierten Erkennungszeit - optimiert wird.

Soll die Erkennungswahrscheinlichkeit noch weiter erhöht werden, so ist es nach einer weiteren bevorzugten Ausführungsform der Erfindung möglich, daß während des Einlernvorgangs in Reihenfolge ihrer Eignung für die Erkennung des Objekts zusätzliche nachgeordnete Referenzgruppen bestimmt werden und daß zum Erkennen des eingelernten Objekts nach Ansteuern der Sendeelemente der Referenzgruppe die Sendeelemente der unmittelbar nachgeordneten Referenzgruppe und ggf. die Sendeelemente von weiteren nachgeordneten Referenzgruppen angesteuert werden. Dies ist insbesondere dann sinnvoll, wenn beispielsweise unterschiedliche Objekte beim Beleuchten mit Sendeelementen derselben Referenzgruppe ähnliche Abbilder oder charakteristische Merkmale ergeben. In diesem Fall kann es sinnvoll sein, weitere nachgeordnete Referenzgruppen während des Einlernvorgangs zu ermitteln und abzuspeichern und diese zusätzlich zu der Hauptreferenzgruppe während des Objekterfassungsbetriebs zu verwenden. Auf diese Weise wird zwar die Zeitdauer für die Erkennung des Objekts verlängert, gleichzeitig wird jedoch die Erkennungswahrscheinlichkeit noch weiter erhöht.

Nach einer weiteren vorteilhaften Ausführungsform der Erfindung wird das erfaßte Abbild des Objekts auf zumindest teilweise Übereinstimmung mit wenigstens einem vorgegebenen Referenzbild überprüft. Bei nicht ausreichender Übereinstimmung des erfaßten Abbildes des Objekts mit dem vorgegebenen Referenzbild kann das erfaßte Abbild auf zumindest teilweise Übereinstimmung mit wenigsten einem weiteren vorgegebenen Referenzbild überprüft werden. Auf diese Weise kann das jeweils aktuell untersuchte Objekt mit einer Vielzahl von vorgegebenen, abgespeicherten Referenzbildern verglichen werden, bis eine Übereinstimmung mit einem der vorgegebenen Referenzbilder erkannt wird. Existiert nur ein einziges vorgegebenes Referenzbild, das mit dem erfindungsgemäßen Verfahren erkannt werden soll, so wird nach nicht ausreichender Übereinstimmung das Objekt als nicht erkannt klassifiziert.

Bevorzugt wird bei einer ausreichenden Übereinstimmung ein Objekterkennungssignal erzeugt, insbesondere wird bei Vorliegen einer Vielzahl von zulässigen vorgegeben Objekten ein für das erkannte Objekt kennzeichnendes Objekterkennungssignal erzeugt.

Bei einer erfindungsgemäß ausgebildeten optoelektrischen Vorrichtung ist es durch die Zusammenfassung verschiedener Sendeelemente in unterschiedlichen Gruppen, die jeweils getrennt zum Aussenden von Licht aussteuerbar sind, möglich, ein zu erkennendes Muster so zu beleuchten, daß das von der Erfassungseinheit aufgrund des remittierten Lichts erfaßte Abbild des Objekts optimale Merkmale, beispielsweise optimale Kontrastverhältnisse und/oder Geometriemerkmale, wie beispielsweise Schattenwurf durch Höhenprofile, erzeugt. Darüber hinaus lassen sich durch eine optimierte Beleuchtung Informationen gewinnen, die die Ausrichtung der Erfassungseinheit, insbesondere einer verwendeten Kamera, bezüglich des Objekts unterstützen.

Die optoelektronische Vorrichtung kann bevorzugt eine optische Einheit zum Abbilden des Objekts auf die Erfassungseinheit umfassen, wobei diese optische Einheit insbesondere einstellbar sein kann, um dadurch unterschiedliche Objektabstände ausgleichen zu können.

Auch die Beleuchtung des Objekts kann durch die Sendeelemente über eine vorgeschaltete Optik oder direkt durch die Sendeelemente erfolgen.

Bevorzugt sind die Sendeelemente insbesondere konzentrisch um die optische Achse der Erfassungseinheit, insbesondere ringförmig um die optische Einheit der Erfassungseinheit herum angeordnet. Grundsätzlich ist jedoch jede beliebige Anordnung der Sendeelemente möglich, durch die das Objekt aus unterschiedlichen Winkeln beleuchtet werden kann.

Die Sendeelemente sind bevorzugt in einer Ebene angeordnet, die insbesondere senkrecht zur optischen Achse der Erfassungseinheit bzw. der optischen Einheit der Erfassungseinheit angeordnet ist.

Weiterhin ist vorteilhaft eine Auswerteeinheit zum Überprüfen des erfaßten Abbilds des Objekts auf zumindest teilweise Übereinstimmung mit wenigstens einem vorgegeben Referenzbild vorgesehen. Diese kann insbesondere als Mikroprozessor ausgebildet sein.

Weitere vorteilhafte Ausführungsformen der Erfindung sind in den Unteransprüchen angegeben.

Die Erfindung wird nachfolgend anhand der Aufgabenstellung "Mustererkennung" unter Bezugnahme auf die Zeichnung näher beschrieben. Dies stellt keine Einschränkung der Erfindung dar, die für eine Vielzahl von unterschiedlichen Bildverarbeitungsaufgaben anwendbar ist, von denen einige beispielhaft eingangs angeführt sind. In der Zeichnung zeigen:
- Fig. 1: eine Vorderansicht auf eine erfindungsgemäß ausgebildete Vorrichtung und
- Fig. 2: einen Längsschnitt durch eine erfindungsgemäß ausgebildete Vorrichtung.

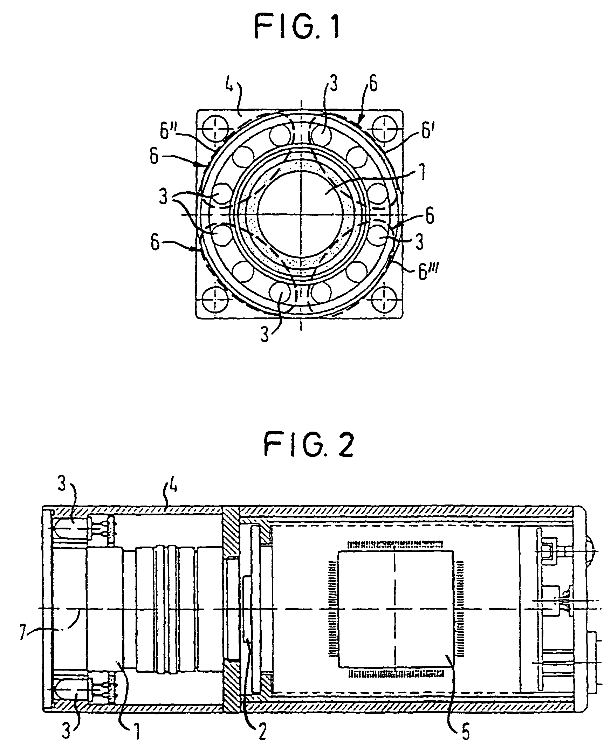

Fig. 1 zeigt eine optische Einheit 1, mit der ein Muster oder ein Objekt auf eine Erfassungseinheit 2 (Fig. 2) beispielsweise einen CCD-Chip oder einen CMOS-basierenden lichtempfindlichen Empfangsbaustein abgebildet werden kann.

Um die optische Einheit 1 herum ist eine Vielzahl von als Leuchtdioden ausgebildeten Sendeelementen 3 angeordnet, durch die ein von der optischen Einheit 1 auf die Erfassungseinheit 2 abgebildetes Muster beleuchtet werden kann.

Die Sendeelemente 3 sind ringförmig und in einer Ebene um die optische Achse 7 der optischen Einheit 1 bzw. der Empfangseinheit 2 angeordnet, wie es aus Fig. 2 erkennbar ist. Dabei sind die Sendeelemente 3 zum Aussenden von Licht einer Frequenz ausgebildet, die von der Erfassungseinheit 2 wiederum empfangbar ist. Licht im Sinne dieser Anmeldung kann jegliche optische Strahlung, beispielsweise Infrarotstrahlung, sichtbares Licht oder UV-Strahlung umfassen. Generell ist unter dem Begriff Licht im Sinne dieser Anmeldung jede optische Strahlung zu verstehen, durch die ein Muster beleuchtet werden kann und ein entsprechendes Abbild der remittierten Strahlung von der Erfassungseinheit 2 erfaßt werden kann.

Die optische Einheit 1, die Erfassungseinheit 2 und die Sendeelemente 3 sind in einem gemeinsamen Gehäuse 4 angeordnet, in dessen rückwärtigen Bereich eine als Mikroprozessor ausgebildete Ansteuerungs- und Auswerteeinheit 5 angeordnet ist.

Die Sendeelemente 3 sind jeweils in Gruppen 6 so zusammengefaßt, daß die jeweils zu einer Gruppe 6 gehörenden Sendeelemente 3 über die Ansteuerungs- und Auswerteeinheit 5 gleichzeitig, jedoch von den Sendeelementen 3 der anderen Gruppen 6 getrennt zum Aussenden von Licht ansteuerbar sind. Während in Fig. 1 beispielhaft jeweils drei Sendeelemente 3 zu einer Gruppe 6 zusammengefaßt sind, ist jede beliebige Zusammenfassung von Sendeelementen 3 zu einer Gruppe 6 möglich. Beispielsweise kann auch jedes Sendeelement 3 für sich allein eine Gruppe 6 bilden oder es können sich unterschiedliche Gruppen 6 auch überlappen.

In einem Einlernvorgang werden jeweils die Gruppen 6, d.h. alle Sendeelemente 3 einer Gruppe 6, durch die Ansteuerungs- und Auswerteeinheit 5 nacheinander zum Aussenden von Licht angesteuert, so daß abhängig von der geraden angesteuerten Gruppe 6 beispielsweise ein unterschiedlicher Schattenwurf auf dem beleuchteten Muster entsteht. Die von der Erfassungseinheit 2 über die optische Einheit 1 erfaßten Abbilder bzw. charakteristische Merkmale dieser Abbilder werden für jede Gruppe 6 gespeichert und nachdem alle Gruppen 6 einmal angesteuert wurden, werden die abgespeicherten Abbilder bzw. Merkmale durch die Ansteuerungs- und Auswerteeinheit 5 auf ihre Eignung für die Erkennung des erfaßten Musters überprüft. Dabei werden die für das Muster charakteristischen Merkmale der erfaßten Abbilder, beispielsweise Schattenwurf, Reflexionen und/ oder Kontrastübergänge ausgewertet.

Diejenige Gruppe 6, die bei der Auswertung als für die Erkennung des Musters am besten geeignet eingestuft wird, wird als Referenzgruppe 6' gekennzeichnet und abgespeichert. Bei Bedarf können auch in einer weiteren Auswertung die nächstbesten Gruppen der Sendeelemente 3 ermittelt und als nachgeordnete Referenzgruppen 6", 6"' abgespeichert werden.

Im Normalbetrieb, dem sogenannten Mustererkennungsbetrieb, werden zunächst ausschließlich die Sendeelemente 3 der Referenzgruppe 6' zum Aussenden von Licht angesteuert, da in diesem Fall die Erkennungswahrscheinlichkeit am höchsten ist.

Ist aufgrund von geometrischen Eigenschaften oder bestimmter Remissionseigenschaften des Musters keine ausreichende Erkennungswahrscheinlichkeit gegeben, so kann anschließend eine oder mehrere der nachgeordneten Referenzgruppen 6", 6"' durch die Ansteuerungs- und Auswerteeinheit 5 angesteuert werden, wodurch die Erkennungswahrscheinlichkeit für das vorgegebene Muster weiter erhöht werden kann.

Ist beispielsweise ein Vielzahl von vorgegebenen Mustern zum Vergleich mit dem erfaßten Muster vorhanden und ist nach Ansteuerung der Referenzgruppe 6' lediglich eine Einschränkung der Erkennung auf beispielsweise zwei der vorgegebenen Muster möglich, so kann durch die weitere Ansteuerung einer oder mehrerer der nachgeordneten Referenzgruppen 6", 6"' - bei gleichzeitiger Einschränkung auf die bereits ermittelten zwei vorgegebenen Muster als zulässige vorgegebene Muster - mit hoher Wahrscheinlichkeit das richtige Muster ausgewählt werden.

### Bezugszeichenliste

- 1: optische Einheit
- 2: Erfassungseinheit
- 3: Sendeelemente
- 4: Gehäuse
- 5: Ansteuerungs- und Auswerteeinheit
- 6: Gruppen der Sendeelemente
- 6': Referenzgruppe
- 6", 6"': nachgeordnete Referenzgruppen

## Patentansprüche

1. Verfahren zur Bildverarbeitung, bei dem ein Objekt durch eine Vielzahl von Licht aussendenden Sendeelementen (3) beleuchtet wird, das beleuchtete Objekt von einer Aufnahmeeinheit (2) erfaßt wird, das von der Aufnahmeeinheit (2) erfaßte Abbild des Objekts zumindest zum Teil ausgewertet wird und die Gruppe (6) der Sendeelemente (3) bestimmt wird, die nach Beenden eines Einlernvorgangs angesteuert wird, um das Objekt zu erfassen,
**dadurch gekennzeichnet,**
**daß** in einem Einlernvorgang nacheinander jeweils unterschiedliche Gruppen (6) der Sendeelemente (3) zum Aussenden von Licht angesteuert werden, wobei zumindest eine Gruppe der Sendeelemente (3) mehrere Sendeelemente (3) umfasst, und
**daß** anhand von vorgegebenen Auswahlkriterien, wobei die Auswahlkriterien charakteristische Merkmale des Objekts sind, die Gruppe (6) der Sendeelemente (3) als Referenzgruppe (6') bestimmt wird, bei deren Ansteuerung während des Einlernvorgangs das Abbild erfasst wird, bei dem ein oder mehrere charakteristische Merkmale des Objekts optimal sind, damit die Erkennungswahrscheinlichkeit des Objekts optimal wird, und daß nach Beenden des Einlernvorgangs zum Erfassen des eingelernten Objekts die Sendeelemente (3) der Referenzgruppe (6') angesteuert werden.

2. Verfahren nach Anspruch 1,
**dadurch gekennzeichnet,**
**daß** die Gruppe (6) der Sendeelemente (3) als Referenzgruppe (6') ausgewählt wird, bei deren Ansteuerung ein charakteristisches Merkmal oder mehrere charakteristische Merkmale des erfaßten Objekts einen Extremwert annehmen.

3. Verfahren nach Anspruch 1 oder 2,
**dadurch gekennzeichnet,**
**daß** als charakteristische Merkmale Schattenwurf, Reflexionen und/oder Kontrastübergänge ausgewertet werden.

4. Verfahren nach einem der vorhergehenden Ansprüche,
**dadurch gekennzeichnet,**
**daß** die Gruppe (6) der Sendeelemente (3) als Referenzgruppe (6') ausgewählt wird, bei deren Ansteuerung das erfaßte Abbild die höchsten Kontrastübergänge besitzt.

5. Verfahren nach einem der vorhergehenden Ansprüche,
**dadurch gekennzeichnet ,**
**daß** zum Erfassen des eingelernten Objekts ausschließlich die Sendeelemente (3) der Referenzgruppe (6') angesteuert werden.

6. Verfahren nach einem der vorhergehenden Ansprüche,
**dadurch gekennzeichnet ,**
**daß** während des Einlernvorgangs in Reihenfolge ihrer Eignung für die Erkennung des Objekts zusätzliche nachgeordnete Referenzgruppen (6", 6"') bestimmt werden und daß zum Erfassen des eingelernten Objekts nach Ansteuern der Sendeelemente (3) der Referenzgruppe (6') die Sendeelemente (3) der unmittelbar nachgeordneten Referenzgruppe (6") und gegebenenfalls die Sendeelemente (3) von weiteren nachgeordneten Referenzgruppen (6"') angesteuert werden.

7. Verfahren nach einem der vorhergehenden Ansprüche,
**dadurch gekennzeichnet,**
**daß** das erfaßte Abbild des Objekts auf zumindest teilweise Übereinstimmung mit wenigstens einem vorgegebenen Referenzbild überprüft wird.

8. Verfahren nach Anspruch 7,
**dadurch gekennzeichnet,**
**daß** bei nicht ausreichender Übereinstimmung des erfaßten Abbildes des Objekts mit dem wenigstens einen vorgegebenen Referenzbild das erfaßte Abbild auf zumindest teilweise Übereinstimmung mit wenigstens einem weiteren vorgegebenen Referenzbild überprüft wird.

9. Verfahren nach Anspruch 7 oder 8,
**dadurch gekennzeichnet,**
**daß** bei ausreichender Übereinstimmung ein Objekterkennungssignal erzeugt wird.

10. Optoelektronische Vorrichtung zur Bildverarbeitung mit einer Vielzahl von Licht aussendenden Sendeelementen (3), die zum Beleuchten eines Objekts ausgebildet und angeordnet sind, und mit einer Erfassungseinheit (2), mit der das beleuchtete Objekt erfaßt und in ein digitales Abbild umsetzbar ist, zum Durchführen des Verfahrens nach einem der vorhergehenden Ansprüche,
**dadurch gekennzeichnet,**
**daß** die Sendeelemente (3) in unterschiedlichen Gruppen (6) zusammengefaßt sind, wobei die Sendeelemente einer Gruppe (6) jeweils gemeinsam, jedoch getrennt von den Sendeelementen (3) der anderen Gruppen (6) zum Aussenden von Licht ansteuerbar sind.

11. Optoelektronische Vorrichtung nach Anspruch 10
**dadurch gekennzeichnet,**
**daß** eine optische Einheit (1) zum Abbilden des Objekts auf die Erfassungseinheit (2) vorgesehen ist.

12. Optoelektronische Vorrichtung nach einem der Ansprüche 10 oder 11,
**dadurch gekennzeichnet,**
**daß** die Sendeelemente (3) insbesondere konzentrisch um die optische Achse (7) der Erfassungseinheit und/oder der optischen Einheit (1) der Erfassungseinheit (2) herum angeordnet sind.

13. Optoelektronische Vorrichtung nach einem der Ansprüche 10 bis 12,
**dadurch gekennzeichnet,**
**daß** eine Auswerteeinheit (5) zum Überprüfen des erfaßten Abbilds des Objekts auf zumindest teilweise Übereinstimmung mit wenigstens einem vorgegebenen Referenzbild vorgesehen ist.

14. Verwendung eines Verfahren nach einem der Ansprüche 1 bis 9 bei einer oder einer Kombination der Anwendungen Mustererkennung, Bildverbesserung, Segmentierung, Klassifizierung, Qualitätsprüfung, Vermessung, Lageprüfung und Oberflächenprüfung.

15. Verwendung einer Vorrichtung nach einem der Ansprüche 10 bis 13 bei einer oder einer Kombination der Anwendungen Mustererkennung, Bildverbesserung, Segmentierung, Klassifizierung, Qualitätsprüfung, Vermessung, Lageprüfung und Oberflächenprüfung.

## Claims

1. A method for picture processing in which an object is illuminated by a plurality of light transmitting transmitter elements (3), the illuminated object is sensed by a taking unit (2), at least part of the image of the object sensed by the taking unit (2) is evaluated and the group (6) of the transmitter elements (3) is determined which is controlled after the ending of a learning process to sense the object,
**characterised in that**,
in a learning process, different groups (6) of the transmitter elements (3) for the transmission of light are respectively controlled sequentially, wherein at least one group of the transmitter elements (3) includes a plurality of transmitter elements (3); and **in that** that group (6) of the transmitter elements is determined as the reference group (6') with reference to pre-determined selection criteria, with the selection criteria being characteristic features of the object, whose control during the learning process leads to sensing of the image, in which one or more characteristic features of the object are at an optimum so that the recognition probability of the object is at an optimum; and **in that**, after the ending of the learning process, the transmitter elements (3) of the reference group (6') are controlled for the sensing of the object learned.

2. A method in accordance with claim 1, **characterised in that** that group (6) of transmitter elements (3) is selected as the reference group (6') on whose control one characteristic feature or a plurality of characteristic features of the sensed object adopt an extreme value.

3. A method in accordance with claim 1 or claim 2, **characterised in that** shadows cast, reflections and/or contrast transitions are evaluated as characteristic features.

4. A method in accordance with any one of the preceding claims, **characterised in that** that group (6) of transmitter elements (3) is selected as the reference group (6') on whose control the sensed image has the highest contrast transitions.

5. A method in accordance with any one of the preceding claims, **characterised in that** only the transmitter elements (3) of the reference group (6') are controlled for the sensing of the object learned.

6. A method in accordance with any one of the preceding claims, **characterised in that** additional subsequent reference groups (6", 6"') are determined during the learning process in the order of their suitability for the recognition of the object; and **in that** the transmitter elements (3) of the directly subsequent reference group (6") and, optionally, the transmitter elements (3) of further subsequent reference groups (6"') are controlled for the sensing of the object learned after controlling the transmitter elements (3) of the reference group (6').

7. A method in accordance with any one of the preceding claims, **characterised in that** the sensed image of the object is checked for at least part correspondence with at least one pre-determined reference image.

8. A method in accordance with claim 7, **characterised in that**, on an insufficient correspondence of the sensed image of the object with the at least one pre-determined reference image, the sensed image is checked for at least part correspondence with at least one further pre-determined reference image.

9. A method in accordance with claim 7 or claim 8, **characterised in that** an object recognition signal is generated on sufficient correspondence.

10. An optoelectronic apparatus for picture processing with a plurality of transmitter elements (3) which transmit light and which are made and arranged to illuminate an object and with a sensing unit (2) by which the illuminated object is sensed and can be converted into a digital image, for the carrying out of the method of any one of the preceding claims,
**characterised in that**
the transmitter elements (3) are combined into different groups (6), with the transmitter elements of one group (6) each being jointly controllable, but separately from the transmitter elements (3) of the other groups (6) for the transmission of light.

11. An optoelectronic apparatus in accordance with claim 10,
**characterised in that** an optical unit (1) is provided for the imaging of the object onto the sensing unit (2).

12. An optoelectronic apparatus in accordance with one of the claims 10 or 11, **characterised in that** the transmitter elements (3) are in particular arranged concentrically around the optical axis (7) of the sensing unit and/or of the optical unit (1) of the sensing unit (2).

13. An optoelectronic apparatus in accordance with any one of claims 10 to 12, **characterised in that** an evaluation unit (5) is provided for the checking of the sensed image of the object for at least part correspondence with at least one pre-determined reference image.

14. Use of a method in accordance with any one of claims 1 to 9 for one application or for a combination of the applications: pattern recognition, image enhancement, segmentation, classification, quality testing, measurement, positional checking and surface testing.

15. Use of an apparatus in accordance with any of claims 10 to 13, for one application or for a combination of the applications: pattern recognition, image enhancement, segmentation, classification, quality testing, measurement, positional checking and surface testing.

## Revendications

1. Procédé de traitement d'images, selon lequel un objet est éclairé par une pluralité d'éléments émetteurs (3) émettant de la lumière, l'objet éclairé est saisi par une unité d'enregistrement (2), l'image de l'objet saisi par l'unité d'enregistrement (2) est évaluée, au moins partiellement, et on détermine le groupe (6) des éléments émetteurs (3) qui est commandé après la fin d'un processus d'apprentissage pour la saisie de l'objet,
**caractérisé en ce que**,
des groupes (6) respectivement différents des éléments émetteurs (3) sont commandés successivement pour émettre de la lumière au cours d'un processus d'apprentissage, au moins un groupe des éléments émetteurs (3) comportant plusieurs éléments émetteurs (3), et
**en ce qu'**à l'aide de critères de sélection prédéterminés, les critères de sélection étant des particularités caractéristiques de l'objet, le groupe (6) des éléments émetteurs (3) est déterminé en tant que groupe de référence (6'), sous la commande duquel on saisit au cours du processus d'apprentissage l'image dans laquelle une ou plusieurs particularités caractéristiques de l'objet sont optimales, afin que la probabilité d'identification de l'objet devienne optimale, et **en ce qu'**après la fin du processus d'apprentissage, les éléments émetteurs (3) du groupe de référence (6') sont commandés pour la saisie de l'objet qui a été appris.

2. Procédé selon la revendication 1,
**caractérisé en ce que**
le groupe (6) des éléments émetteurs (3) est sélectionné en tant que groupe de référence (6'), lors de la commande duquel une particularité caractéristique, ou plusieurs particularités caractéristiques, de l'objet saisi prend une valeur extrême.

3. Procédé selon la revendication 1 ou 2,
**caractérisé en ce que**
l'ombre projetée, des réflexions et/ou des transitions de contraste sont évaluées en tant que particularités caractéristiques.

4. Procédé selon l'une quelconque des revendications précédentes,
**caractérisé en ce que**
le groupe (6) des éléments émetteurs (3) est sélectionné en tant que groupe de référence (6'), sous la commande duquel l'image saisie possède les transitions de contraste les plus élevées.

5. Procédé selon l'une quelconque des revendications précédentes,
**caractérisé en ce que**,
pour la saisie de l'objet qui a été appris, seuls les éléments émetteurs (3) du groupe de référence (6') sont commandés.

6. Procédé selon l'une quelconque des revendications précédentes,
**caractérisé en ce que**,
pendant le processus d'apprentissage, des groupes de référence (6", 6''') supplémentaires placés en aval sont déterminés dans l'ordre de leur aptitude à l'identification de l'objet, et **en ce qu'**après la commande des éléments émetteurs (3) du groupe de référence (6'), les éléments émetteurs (3) du groupe de référence (6") placé directement en aval, et le cas échéant les éléments émetteurs (3) d'autres groupes de référence (6''') placés en aval, sont commandés pour la saisie de l'objet qui a été appris.

7. Procédé selon l'une quelconque des revendications précédentes,
**caractérisé en ce que**
l'image saisie de l'objet est vérifiée quant à sa concordance, au moins partielle, avec au moins une image de référence prédéterminée.

8. Procédé selon la revendication 7,
**caractérisé en ce que**,
en cas de concordance insuffisante de l'image saisie de l'objet avec l'au moins une image de référence prédéterminée, l'image saisie est vérifiée quant à sa concordance, au moins partielle, avec au moins une autre image de référence prédéterminée.

9. Procédé selon la revendication 7 ou 8,
**caractérisé en ce que**
un signal d'identification d'objet est généré en cas de concordance suffisante.

10. Dispositif optoélectronique de traitement d'images destiné à la mise en oeuvre du procédé selon l'une quelconque des revendications précédentes, comportant une pluralité d'éléments émetteurs (3) émettant de la lumière qui sont conçus et disposés pour l'éclairage d'un objet, et une unité d'enregistrement (2), avec laquelle l'objet éclairé est saisi et peut être converti en une image numérique,
**caractérisé en ce que**
les éléments émetteurs (3) sont regroupés en différents groupes (6), les éléments émetteurs d'un groupe (6) pouvant être respectivement commandés en commun pour l'émission de lumière, mais séparément des éléments émetteurs (3) des autres groupes (6).

11. Dispositif optoélectronique selon la revendication 10,
**caractérisé en ce que**
il est prévu une unité optique (1) pour la reproduction de l'objet sur l'unité d'enregistrement (2).

12. Dispositif optoélectronique selon l'une des revendications 10 ou 11,
**caractérisé en ce que**
les éléments émetteurs (3) sont notamment disposés de façon concentrique autour de l'axe optique (7) de l'unité d'enregistrement et/ou de l'unité optique (1) de l'unité d'enregistrement (2).

13. Dispositif optoélectronique selon l'une quelconque des revendications 10 à 12,
**caractérisé en ce**
**qu'**il est prévu une unité d'évaluation (5) pour la vérification de l'image saisie de l'objet quant à sa concordance, au moins partielle, avec au moins une image de référence prédéterminée.

14. Utilisation d'un procédé selon l'une quelconque des revendications 1 à 9 lors d'une application ou d'une combinaison d'applications pour l'identification de modèles, l'amélioration de l'image, la segmentation, la classification, le contrôle de qualité, le mesurage, le contrôle de position et le contrôle de surface.

15. Utilisation d'un dispositif selon l'une quelconque des revendications 10 à 13 lors d'une application ou d'une combinaison d'applications pour l'identification de modèles, l'amélioration de l'image, la segmentation, la classification, le contrôle de qualité, le mesurage, le contrôle de position et le contrôle de surface.
